# FASCICULE DE BREVET EUROPEEN

(11) **EP 1 612 474 B1**
(45) Date de publication et mention de la délivrance du brevet: **07.09.2011**
(21) Numéro de dépôt: 05291396.9
(22) Date de dépôt: 29.06.2005
(51) Int. Cl.: F21V 7/00, F21S 8/10, B60Q 1/14

(54) **Dispositif d'éclairage et/ou de signalisation pour véhicule automobile**
Beleuchtungsvorrichtung und/oder Signalvorrichtung für Fahrzeuge
Signaling and/or lighting assembly for vehicles

(30) Priorité: 02.07.2004 FR 0407412
(43) Date de publication de la demande: 04.01.2006
(73) Titulaire: VALEO VISION, 93012 Bobigny Cedex (FR)
(72) Inventeur: Pauty, Etienne, 75019 Paris (FR); Ravier, Jean -Paul, 94100 Saint Maur des Fosses (FR); Collot, Patrice, 93500 Pantin (FR); Penn, Claude,c/o Valeo Illuminacion, 23600 Martos (ES)
(74) Mandataire: Tran, Chi-Hai

(56) Documents cités:
- EP-A- 1 089 324
- EP-A- 1 382 900
- EP-A- 1 471 305
- DE-A1- 10 205 776
- PATENT ABSTRACTS OF JAPAN vol. 1998, no. 10, 31 août 1998 (1998-08-31) & JP 10 116503 A (KOITO MFG CO LTD), 6 mai 1998 (1998-05-06)

## Description

L'invention est relative à un dispositif d'éclairage et/ou de signalisation de type projecteur de véhicule automobile.

L'augmentation des exigences en matière de signalisation des véhicules automobiles s'est notamment concrétisée par le règlement sur les feux diurnes de la Communauté Européenne intitulé "ECE regulation R87 : Daytime Running Lamp", qui seront désignés ci-après par l'abréviation anglaise DRL. Or intégrer cette fonction supplémentaire DRL dans un projecteur n'est pas toujours facile à réaliser.

Une première solution pour assurer cette fonction DRL ou "feu diurne" consiste à allumer en permanence les feux de croisement (code), comme les pays scandinaves le pratiquent actuellement. Toutefois, en procédant de la sorte, on augmente la consommation d'énergie de façon non négligeable, et on réduit la durée de vie des sources lumineuses. La photométrie du feu de croisement, tolérée pour cette fonction, n'est en outre pas la photométrie spécifique de la fonction DRL.

La photométrie de la fonction DRL est en effet relativement différente de celle des autres fonctions d'éclairage assurées par les projecteurs de véhicules automobiles. En particulier, le faisceau DRL est relativement épais suivant l'axe optique, avec une intensité lumineuse plus faible que pour les feux de route ou de croisement.

On peut aussi prévoir un feu diurne DRL spécifique, mais dans ce cas il faut ajouter à l'avant du véhicule, dans le bouclier ou dans le projecteur, une cavité équipée des moyens appropriés et dédiée à la fonction DRL. Actuellement, la surface éclairante exigée par le règlement R87 pour la fonction DRL est de 40 cm² et il n'est pas toujours aisé de trouver un emplacement pour une telle surface éclairante.

Le brevet EP 1 382 900 a proposé par ailleurs l'utilisation d'une source lumineuse à deux filaments, dont un équipé d'une coupelle et un autre dépourvu de coupelle. Cette source lumineuse est associée à un réflecteur comprenant une zone prévue pour coopérer avec un des filaments et une autre zone prévue pour coopérer avec le second filament. Un des filaments est affecté à la fonction DRL, l'autre filament permettant l'obtention d'un autre type de faisceau lumineux.

Il est également connu du brevet EP 1 089 324 une source lumineuse bi filament, dont un filament permet d'obtenir un faisceau de type route et l'autre filament un faisceau de type feu diurne.

Le but de l'invention est de proposer un dispositif d'éclairage qui offre un faisceau à photométrie spécifique, notamment une fonction DRL, et qui soit amélioré par rapport aux systèmes d'éclairage, du type DRL, existants, notamment en termes de performances optiques et/ou meilleur respect des réglementations en vigueur, et/ou en termes de compacité. Le document DE10205776 presente les caractéristiques du preamble de la revendication 1.

L'invention a tout d'abord pour objet un dispositif d'éclairage pour véhicule automobile, comprenant une première source lumineuse focalisée sur une première zone réfléchissante et une seconde source lumineuse focalisée sur une seconde zone réfléchissante. La source lumineuse est apte à émettre de la lumière à la fois en direction de la première zone réfléchissante et d'une partie de la seconde zone réfléchissante, la lumière provenant de la première source lumineuse et réfléchie par les deux zones réfléchissantes correspondant à un faisceau lumineux de feu diurne ou DRL.

La première source lumineuse, affectée à la fonction DRL, utilise ainsi non seulement une zone réfléchissante qui lui est dédiée, mais aussi une partie d'une zone réfléchissante qui est globalement adaptée pour une autre fonction. L'association de la source lumineuse et de la première zone réfléchissante permet d'obtenir la substance de la photométrie requise pour un DRL, et on « détourne » une autre zone réfléchissante pour qu'elle participe aussi à la fonction DRL, même sans qu'elle soit particulièrement optimisée pour cela, mais de façon à pouvoir garantir, notamment, la surface éclairante minimum de 40 cm² requise pour un DRL. On obtient ainsi une fonction DRL avec un projecteur de type multi-fonction, notamment bi-fonction, où la fonction DRL est réalisée avec une grande compacité de moyens : la somme des surfaces des zones réfléchissantes pour obtenir plusieurs fonctions, dont une fonction DRL, est plus faible, moins volumineuse, qu'avec une solution traditionnelle où une lampe et son réflecteur dédié doivent à eux seuls assurer la photométrie et la surface éclairante requises pour un DRL.

La réflexion par la seconde zone réfléchissante de la lumière émise par la première source lumineuse peut être est directe ou indirecte, c'est-à-dire qu'elle peut être précédée par au moins une réflexion préalable sur une surface réfléchissante.

De préférence, la seconde source lumineuse est apte à émettre de la lumière en direction de la seconde zone réfléchissante, et optionnellement aussi en direction d'une partie de la première zone réfléchissante, la lumière provenant de la seconde source lumineuse et réfléchie par la ou les zones réfléchissantes correspondant à un faisceau à coupure, du type anti-brouillard ou code, ou à un faisceau sans coupure, du type route.

La seconde zone réfléchissante est ainsi étudiée pour obtenir avec la seconde source, la fonction de photométrie voulue, sachant qu'une portion de cette seconde zone réfléchissante, comme mentionné plus haut, participe également à la fonction DRL (le DRL ne fonctionnant pas simultanément avec la seconde fonction de type code ou route, cette portion va donc alternativement fonctionner en code, route, anti-brouillard, toute autre fonction dite AFS pour Advanced Front Lighting Systems ....ou en DRL). On peut obtenir ainsi des projecteurs bi fonction DRL/code, DRL/route, DRL/anti-brouillard compacts.

Comme fonction dite AFS, on peut citer :
- la fonction dite Town Light en anglais, pour feu de ville. Cette fonction assure l'élargissement d'un faisceau de type feu de croisement tout en diminuant légèrement sa portée ;
- la fonction dite Motorway Light en anglais, pour feu d'autoroute. Cette fonction assure une augmentation de la portée d'un feu de croisement ;
- la fonction dite Overhead Light en anglais, pour feu surélevé. Cette fonction assure une modification d'un faisceau de feu de croisement de telle sorte que des portiques situés en hauteur sont éclairés de façon satisfaisante au moyen des feux de croisement ;
- la fonction dite AWL (Adverse Weather Light en anglais, pour feu de mauvais temps). Cette fonction assure une modification d'un faisceau de feu de croisement de telle sorte que le conducteur n'est pas ébloui par un reflet de son propre projecteur.

L'invention propose plusieurs modes de réalisation. Selon un premier mode de réalisation, la première zone réfléchissante est un réflecteur définissant une première cavité dans laquelle est disposée la première source lumineuse. Et la seconde zone réfléchissante est un réflecteur définissant une seconde cavité dans laquelle est disposée la seconde source lumineuse. On peut alors obtenir des projecteurs à une cavité par fonction, mais, comme on l'a vu, avec une fonction « empiétant » sur la cavité de l'autre fonction.

Selon un second mode de réalisation, les zones réfléchissantes font partie d'un même réflecteur définissant une seule cavité dans laquelle sont disposées les deux sources lumineuses. Dans ce cas de figure, on a deux fonctions pour une seule cavité.

Pour le premier mode de réalisation comme pour le second, les sources lumineuses peuvent être constitués de lampes distinctes, par exemple choisies parmi les lampes halogène, par exemple des lampes H1, H7, H21,W21/5, H4, DFCS (abréviation anglo-saxonne pour « double filament complex shape »), des lampes xénon ou à base d'une ou plusieurs diodes électroluminescentes ..... , placées dans les réflecteurs munis de trous de lampes appropriés. Pour le second mode de réalisation plus particulièrement, on peut aussi regrouper les deux sources lumineuses dans une seule lampe, de type multi filament, comme les lampes bi filaments avec ou sans coupelle. L'avantage de ces lampes bi filament est, notamment, leur compacité. En outre, utiliser une seule lampe bi filament au lieu de deux lampes dans un réflecteur signifie que le réflecteur ne sera muni que d'un trou de lampe au lieu de deux, et qu'il offrira donc une surface optiquement active plus importante à volume/pourtour de dimension constante. On peut prévoir que l'un des filaments, celui affectée au DRL, fonctionne sous une puissance électrique réduite relativement à celle de l'autre filament

Avantageusement, le dispositif selon l'invention comporte optionnellement une troisième zone réfléchissante focalisée sur la première source lumineuse. Cette troisième zone réfléchissante est de préférence au moins partiellement de forme annulaire et/ou est un prolongement de la seconde surface réfléchissante. Elle reçoit donc une partie de la lumière émise par la première source lumineuse, et, elle est de préférence affectée/dédiée à la fonction DRL comme la première zone réfléchissante (et contrairement à la seconde zone réfléchissante): on l'utilise notamment pour augmenter/ajuster la plage éclairante du DRL quand cela est nécessaire, et elle n'a de préférence pas de source lumineuse spécifique, à part la première source. Selon une disposition préférée, une partie du pourtour de la troisième zone réfléchissante est en contact ou à proximité du pourtour de la première et/ou de la seconde zone réfléchissante : elle forme donc éventuellement le prolongement de l'une ou l'autre de ces zones réfléchissantes, mais sans continuité de surface, et avec une zone de jonction limitée.

Avantageusement, la première source lumineuse peut être apte à émettre de la lumière en direction d'une partie de la seconde zone réfléchissante par une réflexion préalable de la lumière directement émise sur une quatrième zone réfléchissante du type joue, notamment une joue associée à la première zone réfléchissante. En d'autres termes, la lumière provenant de la première source et qui vient frapper une portion de la seconde zone réfléchissante peut le faire soit directement, soit en ayant déjà été réfléchie une fois. On comprend par « joue » dans le cadre de l'invention une portion de zone à aspect réfléchissant, qui a généralement un rôle plus esthétique qu'optique en offrant une continuité d'aspect et de surface dans les zones séparant deux réflecteurs ou séparant le réflecteur des parois du boîtier ou du masque par exemple. Ici, la joue est réfléchissante, et on peut lui faire jouer ce rôle optique.

L'invention a également pour objet un dispositif d'éclairage pour véhicule automobile, comprenant une première source lumineuse focalisée sur une première zone réfléchissante et une seconde source lumineuse focalisée sur une seconde zone réfléchissante avec la première source lumineuse qui est apte à émettre de la lumière à la fois en direction de la première zone réfléchissante et d'une partie de la seconde zone réfléchissante La lumière provenant de la première source lumineuse et réfléchie par les deux zones réfléchissantes correspond à un faisceau lumineux de photométrie donnée, la première zone réfléchissante est un réflecteur définissant une première cavité dans laquelle est disposée la première source lumineuse , et la seconde zone réfléchissante est un réflecteur définissant une seconde cavité dans laquelle est disposée la seconde source lumineuse. Ce faisceau lumineux peut être de type DRL ou autres, et être ainsi généré quand la première source est allumée et que la seconde est éteinte. Inversement, on peut également prévoir que la seconde source puisse émettre une partie de sa lumière vers la première surfcae réfléchissante, de façon à ce que, quand la première source est éteinte et la seconde allumée, la lumière réfléchie par les deux surfaces réfléchissantes permettre d'obtenir un faisceau de photométrie différente du précédent. On a ainsi un projecteur bi-fonction compact, effectivement adapté quand une des fonctions, notamment, est de type DRL.

Avantageusement, des moyens sont prévus pour éviter que la seconde source puisse être apte à émettre de façon significative de la lumière en direction du premier réflecteur. On peut ainsi prévoir des moyens comportant un mur (M) séparant des deux réflecteurs et/ou une zone fresnelisée dans l'un des réflecteurs, notamment le premier réflecteur. Ceci s'avère notamment utile quand le second réflecteur associé à la seconde source sont destinés à émettre un faisceau à coupure.

L'invention a également pour objet le véhicule équipé d'au moins un de ces dispositifs.

Elle sera mieux comprise à l'aide des exemples de réalisation non limitatifs, décrits ci-après à l'aide des figures suivantes :
- Figure 1 : une première variante de projecteur selon l'invention avec deux cavités en vue de face
- Figure 2 : une seconde variante de projecteur selon l'invention avec deux cavités en vue de face
- Figure 3 : une troisième variante de projecteur selon l'invention avec une cavité en vue de face
- Figure 4 : une quatrième variante de projecteur selon l'invention avec une cavité en vue de face
- Figure 5 : un premier exemple selon la première variante, en section verticale passant par les foyers des lampes
- Figure 6 : un second exemple selon la première variante, en section verticale passant par les foyers des lampes
- Figures 7a,7b : un troisième exemple selon la quatrième variante, en vue en perspective (7a) et en section verticale (7b) passant par les foyers des lampes
- Figures 8a,8b : un quatrième exemple selon une cinquième variante, en vue de face (8a) et en perspective (8b)
- Figure 9 : un cinquième exemple
- Figure 10a,10b : un sixième exemple

Toutes ces figures sont très schématiques, afin d'être claires. Les mêmes références correspondent au même type de composant d'une figure à l'autre.

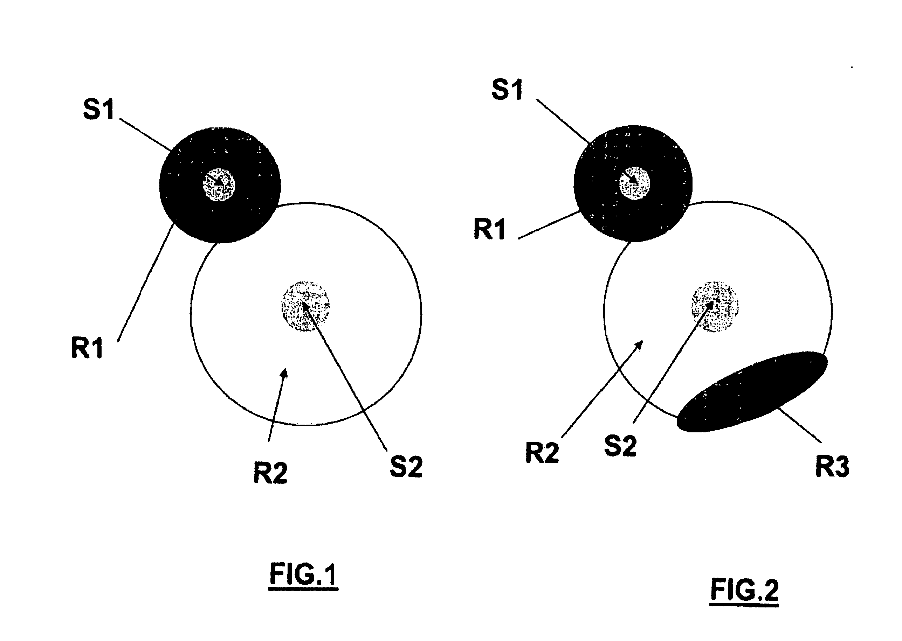

La figure 1 représente donc en vue de face une première variante « bi cavités » : on y a représenté le premier réflecteur R1 avec sa lampe S1 focalisée sur R1 et généralement disposée de façon centrée au fond du réflecteur. La lampe est par exemple une lampe halogène de type H21, et le réflecteur R1 a un diamètre extérieur de par exemple environ 40 mm.

Est également représenté le second réflecteur R2 avec sa lampe S2 focalisée sur R2 et également disposée au fond de celui-ci. La lampe S2 est, par exemple, une lampe halogène de type H1, et le diamètre du réflecteur R2 est, par exemple, d'environ 90 mm.

La représentation très simplifiée de R1 et R2 selon la figure 1 montre qu'il s'agit bien de deux cavités distinctes, côte à côte, et par exemple moulées d'une même pièce. Dans cette configuration, R1 se trouve au dessus de R2, les deux lampes étant substantiellement alignées selon un axe oblique par rapport à l'horizontale, une fois le projecteur les comprenant monté dans le véhicule. Mais il est clair que toute autre configuration relative permet aussi d'appliquer l'invention, par exemple, en inversant la position de R1 et de R2, ou en les disposant dans un même plan horizontal, l'un à la droite de l'autre, ou selon tout plan oblique par rapport à l'horizontale ou selon une verticale. Cette remarque s'applique pour toutes les autres figures et exemples du présent brevet.

La fonction DRL est activée en allumant la lampe S1 : elle envoie de la lumière vers R1, mais également vers une partie de R2, notamment, dans le cas représenté à la figure 1, vers une portion inférieure de R2. C'est la somme de la lumière de S1 réfléchie par R1 et réfléchie par cette portion inférieure de R2 qui permet d'obtenir la photométrie et la surface éclairante minimale requises pour un DRL, notamment par le règlement européen précité : la lumière de S1 réfléchie par R1 permet d'obtenir la grille photométrique d'un DRL, et la lumière de S1 provenant de R2 permet d'agrandir la plage éclairante requise pour le DRL.

Quand la fonction DRL est inactivée, la lampe S1 est éteinte, et on peut activer l'autre fonction, code, route etc.... en allumant la lampe S2 : l'autre fonction est, majoritairement ou essentiellement, obtenue par la lumière émise par S2 et réfléchie par R2. Cependant, une certaine quantité de lumière provenant de S2 peut atteindre aussi R1, notamment, dans la configuration de la figure 1, une portion supérieure de R1. Ce n'est pas gênant pour une fonction sans coupure de type route, et ce qui peut même être souhaitable et voulu : on a alors une situation qui rappelle un peu celle concernant le DRL, où la fonction de type route est globalement assurée par la lumière émise par S2 et réfléchie par R2 mais aussi éventuellement par R1, même si c'est dans des proportions bien moindres.

On note que la portion inférieure de R2 participe en fait à la fois au DRL et à la seconde fonction de type route, code ... : on peut donc faire en sorte que cette portion soit optiquement définie de façon à être un compromis entre une définition où elle serait entièrement dédiée/adaptée au DRL et une définition où elle serait entièrement dédiée/adaptée à la seconde fonction. On peut alternativement choisir aussi de l'ajuster spécifiquement pour l'une ou l'autre fonction : elle participe alors à l'autre fonction, mais sans être définie optiquement pour cela. La définition optique de la surface réfléchissante adaptée à un route ou un code peut, par exemple, être de type surface complexe, ceci de façon connue.

La figure 2 représente une seconde variante « bi-cavité » : on retrouve les éléments R1, R2, S1 et S2 tels que déjà définis pour la figure 1, mais elle représente en outre une troisième zone réfléchissante R3 dépourvue de lampe spécifique et de trou de lampe. Cette zone R3 a été ajustée afin de réfléchir également une partie de la lumière émise par S1, et de participer également à la photométrie du DRL : S1 est donc également focalisée sur R3. Cette zone R3 peut être un prolongement de R2 ou non : même intégré dans la cavité définie par R2 et prolongeant, il présente généralement une discontinuité de surface avec R2. La partie supérieure de R2 va être dans l'ombre du bas de la cavité R1 mais S1 peut quand même éclairer une partie de R2. R3 peut recevoir de la lumière de S2, mais dans le cas où R2 est conçu pour un faisceau à coupure de type code ou anti-brouillard, il est préférable de prévoir que R3 soit convergent pour la source S2, et qu'il réfléchisse donc des rayons provenant de S2 que sous la coupure.) L'avantage de cette surface réfléchissante supplémentaire R3 est que l'on peut la dédier/la définir optiquement exclusivement pour la fonction DRL, ou la définir comme un compromis des deux fonctions.

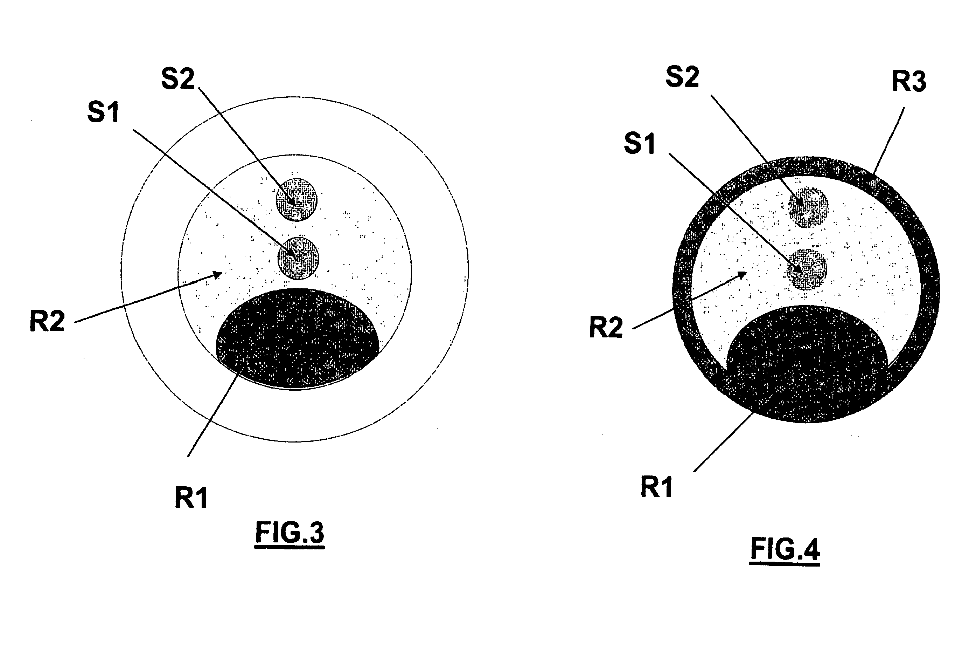

La figure 3 représente une première variante « mono cavité » : pour remplir les deux fonctions, on n'utilise qu'une seule cavité associée à deux lampes S1, S2 disposées dans deux trous de lampe décalés pratiqués dans la cavité. La cavité comporte une première surface réfléchissante R1 sur laquelle est focalisée S1. R1 est disposée en partie inférieure de la cavité, selon une surface dont les pourtours suivent pour partie le pourtour de la cavité et pour partie une ligne courbe. Elle comporte aussi une seconde surface réfléchissante R2 sur laquelle est focalisée S2, qui complète géométriquement la surface de R1 pour définir la cavité. Comme dans le cas bi-cavités de la figure 1, on a donc la fonction DRL assurée, pour la plus grande partie, par la lumière émise par S1 et réfléchie par R1, qui est définie optiquement pour un DRL. Et une partie de la lumière émise par S1 vient frapper une portion de R2, portion qui participe donc aussi au DRL, notamment afin d'atteindre la surface de plage éclairante requise.

La figure 4 représente une seconde variante « mono-cavité » : elle comporte les éléments déjà référencés à la figure 3, mais comporte en plus une troisième zone réfléchissante R3, ici sous une forme approximativement annulaire, qui, comme dans le cas de la figure 3, est définie pour fonctionner avec S1 (S1 étant aussi focalisée sur R3) pour participer au DRL. Comme les figures suivantes l'expliciteront, cette zone R3 de type annulaire n'est pas en jonction sur tout son pourtour avec R1 ou R2, mais seulement sur une partie localisée de son pourtour. II est à noter que pour la figure 3 comme pour la figure 4, on peut définir la surface R2 de façon à ce qu'elle soit capable, associée avec S2, à remplir l'intégralité de la photométrie du faisceau lumineux de la seconde fonction de type code, anti-brouillard ou route : ainsi, même si, de façon incidente, une partie de la lumière de S2 frappe R1 quand c'est la seconde fonction qui est activée, la lumière réfléchie par R1 est superflue pour assurer cette seconde fonction. On peut aussi faire un choix différent, et modifier au moins faiblement la définition optique de la portion du réflecteur R1 recevant de la lumière émise par S2, de façon à ce qu'elle participe de façon volontaire et contrôlée également à la photométrie de la seconde fonction.

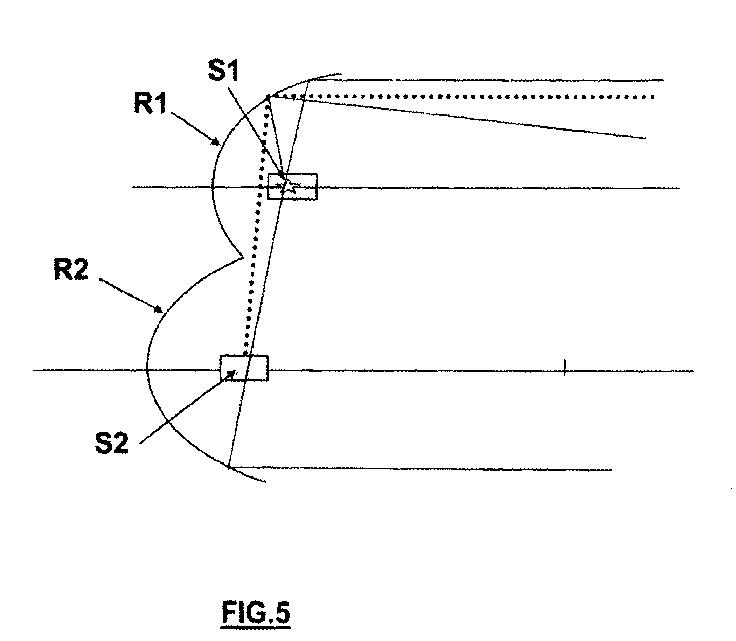

La figure 5 est un premier exemple de réalisation selon la variante « bi-cavité » représentée en figure 1 et décrite plus haut. Il s'agit d'un dispositif bi-fonction de type route/DRL, où l'on retrouve les sources S1,S2 et les cavités R1, R2, en section selon un plan vertical.

Pour réaliser la fonction DRL, S1 envoie donc une grande partie de sa lumière sur R1, mais aussi vers une portion inférieure de R2 : on a tracé en traits pleins le trajet d'un rayon lumineux émis par S1 venant frapper R2. On comprendra que la quantité de lumière de S1 qui va atteindre R2 et la délimitation de la zone de R2 qui peut être atteinte par la lumière émise par S1 dépendent de nombreux paramètres, dont la configuration relative des deux cavités, de la position et de la puissance des lampes, de la position des foyers des deux cavités, et de la façon dont sont reliées les deux cavités , notamment de la position du point le plus haut du « mur » M les séparant par rapport à la position des lampes S1, S2 et/ou foyers des deux cavités R1,R2.

Pour réaliser la fonction route, S2 envoie une grande partie de sa lumière vers R2, qui est défini de façon à pourvoir faire à lui seul la photométrie d'un route. Cependant, dans l'exemple représenté, on voit qu'une (faible) partie de la lumière de S2 parvient à frapper une portion supérieure de R1 : on a matérialisé un rayon émis par S2 et suivant ce trajet en traits pointillés. Pour un route, il est sans importance/incidence qu'une fuite de lumière soit ainsi réfléchie par R1. Comme évoqué plus haut, on peut choisir d'ajuster la portion supérieure de R1 pour qu'elle travaille de façon améliorée à la fois pour un route et un DRL, et non pas seulement en vue de fonctionner pour un DRL. Alternativement ou cumulativement, on peut aussi choisir d'ajuster la portion inférieure de R2 pour qu'elle travaille de façon améliorée à la fois pour un DRL et le route. La figure 5 montre aussi en traits pleins passant par les deux lampes S1 et S2 l'amplitude de la plage éclairante du DRL quand celui-ci est activé : on voit que l'on peut ainsi avoir une plage éclairante bien plus haute/importante que si la fonction DRL était confinée à la lumière réfléchie par la cavité R1.

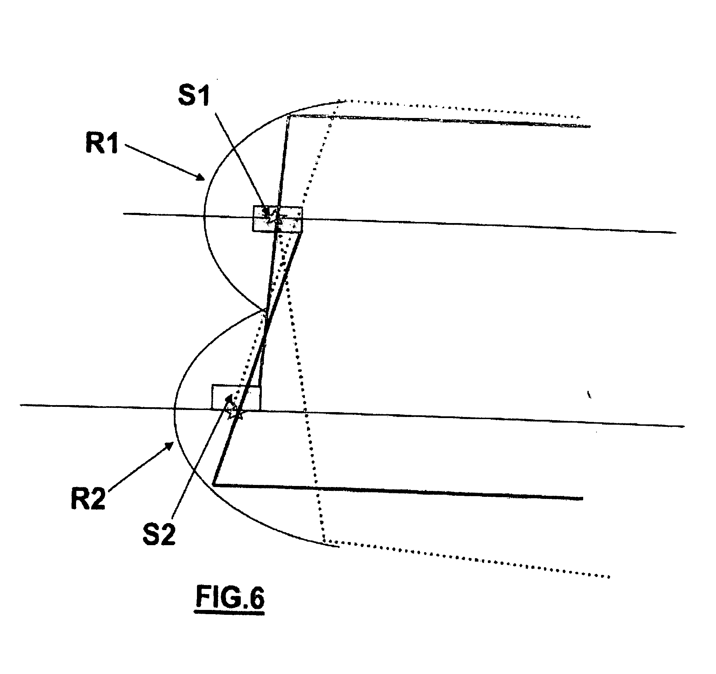

La figure 6 est un second exemple de réalisation selon la variante « bi-cavité » représentée en figure 1 et décrite plus haut. Il s'agit d'un dispositif bi-fonction de type code (ou Anti-brouillard)/DRL, où l'on retrouve les sources S1,S2 et les cavités R1, R2, en section selon un plan vertical. Cette fois, la seconde fonction est une fonction à coupure (situation analogue à un bi fonction anti-brouillard/DRL), ce qui implique qu'il est utile de contrôler de façon précise les éventuelles « fuites » de lumière provenant de S2 et réfléchies par R1, de façon à s'assurer que l'on n'envoie pas de la lumière au dessus de la coupure avec une intensité telle que les conditions réglementaires d'un code (ou Anti-brouillard) ne seraient plus respectées. On a donc modifié la forme des cavités R1,R2 , déplacé les lampes S1,S2 et le point haut M du « mur » séparant les deux cavités par rapport à l'exemple selon la figure 5, de façon à ce que le filament de la lampe S2 ne soit plus ou quasiment plus « visible » par la cavité R1. Par contre, la lampe S1 reste capable d'envoyer de la lumière en partie basse de la cavité R2 pour qu'elle participe à la réalisation de la plage éclairante du DRL. Deux traits partant de S2 matérialisent deux trajets de rayons de lumière émis par S2 en direction de R1, mais qui sont convergents après réflexion sur R1 : c'est une première option, où l'on tolère que des rayons émis par S2 atteignent R1, mais de façon à ce que les rayons réfléchis par R1 restent sous la coupure du code ou de l'anti-brouillard. Une autre option consiste à empêcher que des rayons émis par S2 n'atteignent R1 : on peut notamment ajuster la dimension/la configuration du mur M afin de bloquer ces rayons. Deux traits partant de S1 matérialisent deux trajets de rayons de lumière émis par S1 en direction de R2 : Ces deux rayons montrent la zone de R2 pouvant participer à la fonction DRL.

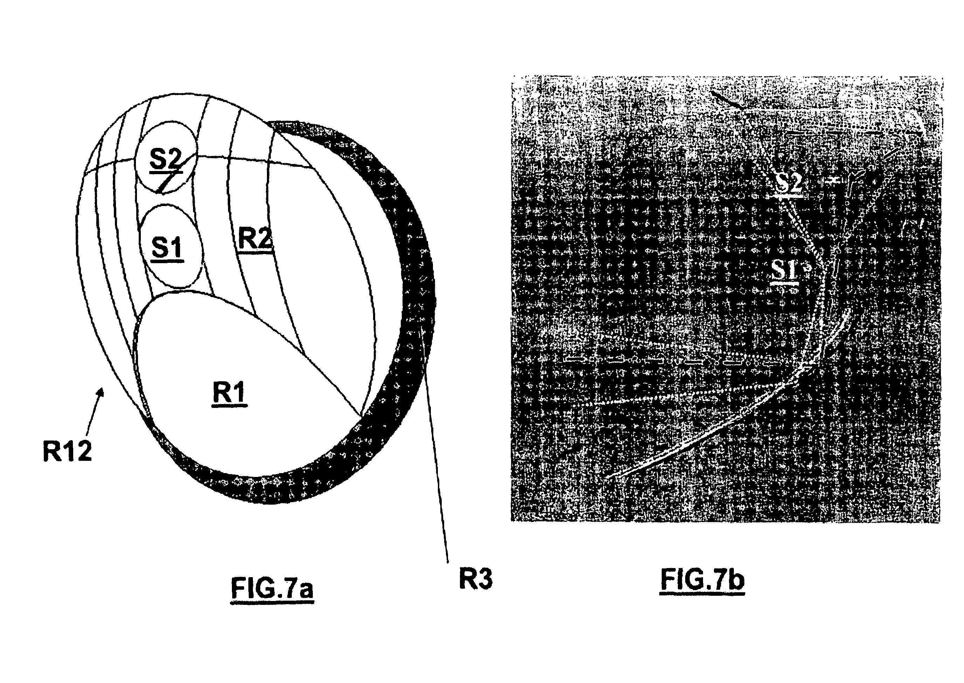

Les figues 7a et 7b correspondent à un troisième exemple de réalisation de l'invention, selon la variante « mono-cavités » déjà décrite à l'aide de la figure 4. Cet exemple se rapport à un bi-fonction route/DRL. On voit de la figure 7a les lampes S1,S2 symboliquement représentées : elles sont disposées l'une au dessus de l'autre, chacune ayant sa zone réfléchissante associée R1,R2 , intégrées dans une seule cavité R12. Dans cette configuration mono-cavité on remarque que S1 n'est pas au centre de ou dans la zone R1, mais déportée par rapport à celle-ci. On voit aussi la surface réfléchissante R3, focalisée sur S1, et dont une partie du pourtour inférieur interne (celui dont le diamètre est le plus petit) est attenante au pourtour inférieur I de R1 (qui est également, dans cette portion de la cavité, le pourtour de la cavité elle-même). Le reste du pourtour interne de la zone réfléchissante annulaire R3 n'est pas en contact avec le pourtour de la cavité réfléchissante R12. Pour assurer une continuité de surface, on peut prévoir une surface venant combler l'espace entre la partie supérieure de la cavité 12 et le pourtour interne de R3, par exemple sous forme d'une surface du type joue ou masque, d'aspect mat ou réfléchissant mais sans ou quasiment sans rôle optique autre qu'esthétique.

La figure 7b montre en pointillés le trajet d'un rayon lumineux émis par S1 et frappant R3 dans sa partie supérieure afin quelle participe à la fonction DRL. On a aussi matérialisé par deux traits discontinus deux rayons émis par S2, l'un venant frapper R2, c'est-à-dire la zone réfléchissante définie pour faire une photométrie de type route, et un autre qui parvient à atteindre la zone réfléchissante R1. Le choix peut donc être d'ajuster optiquement R1 exclusivement en vue de participer à un DRL, ou de choisir une définition optique qui est un compromis entre une participation à un DRL et une participation à un route.

Une variante de cette figure est son application à un bi-fonction code ou anti-brouillard /DRL, avec, comme dans le cas de l'exemple selon la figure 6 et pour les mêmes raisons, une suppression ou un plus grand contrôle de la lumière émise par S2 vers R1 ou R3.

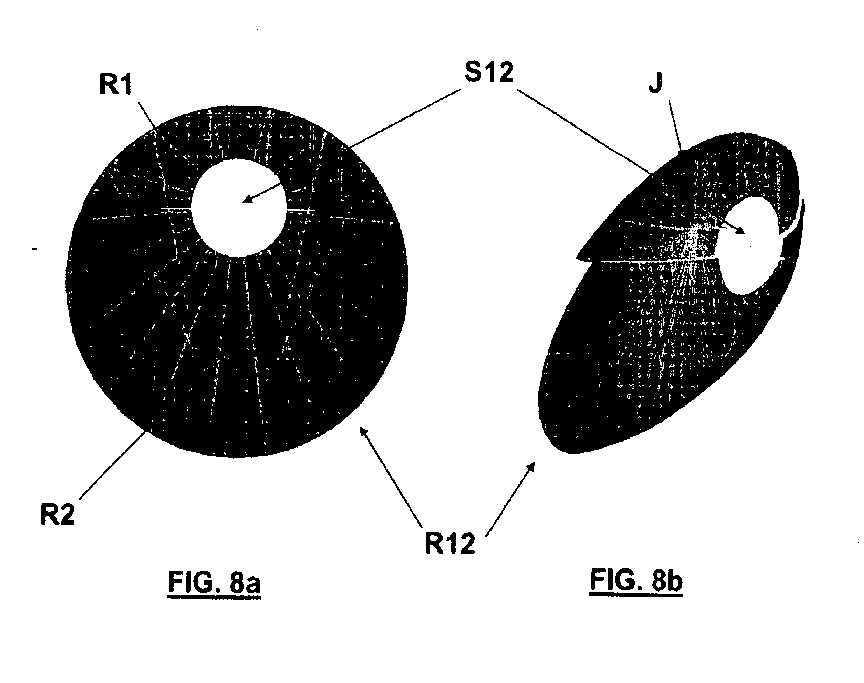

Les figures 8a,8b correspondent à un quatrième exemple, qui reprend le système mono-cavité de la figure 3, mais en utilisant non pas deux lampes distinctes S1, S2, mais une seule lampe S12 à deux filaments, l'un pour le DRL, l'autre pour le route ou le code (ou anti-brouillard). La figure 8a est une vue de face, où l'on retrouve la zone R1 dédiée au DRL et cette fois disposée en partie supérieure de la cavité R12, et la zone R2 qui vient la compléter pour définir la cavité. Sont représentés des rayons en étoile, matérialisant des rayons émis par le filament route et frappant la zone R2 mais aussi la zone R1. Concernant les rayons émis par le filament DRL, cet exemple illustre le cas où des rayons vont effectivement frapper une partie de la zone réfléchissante R2 adaptée à la seconde fonction de type code ou route ou anti-brouillard, mais pas par émission directe vers R2 : ici, les rayons provenant du filament DRL (c'est-à-dire la source S1 des exemples précédents) vont d'abord être une première fois réfléchis par une joue J représentée en figure 8b, qui est dans le prolongement de R1, dans sa partie supérieure. Et les rayons, une fois réfléchis sur la joue J, sont redirigés par celle ci vers R2, pour être finalement réfléchis par R2 : ces rayons ont donc subi une double réflexion avant de sortir du dispositif d'éclairage par sa glace de fermeture, contrairement aux rayons frappant R1, qui, eux, ne subissent qu'une simple réflexion. Ce trajet en double réflexion est symbolisé par les rayons matérialisés par des traits en ligne brisée aux figures 8a et 8b.

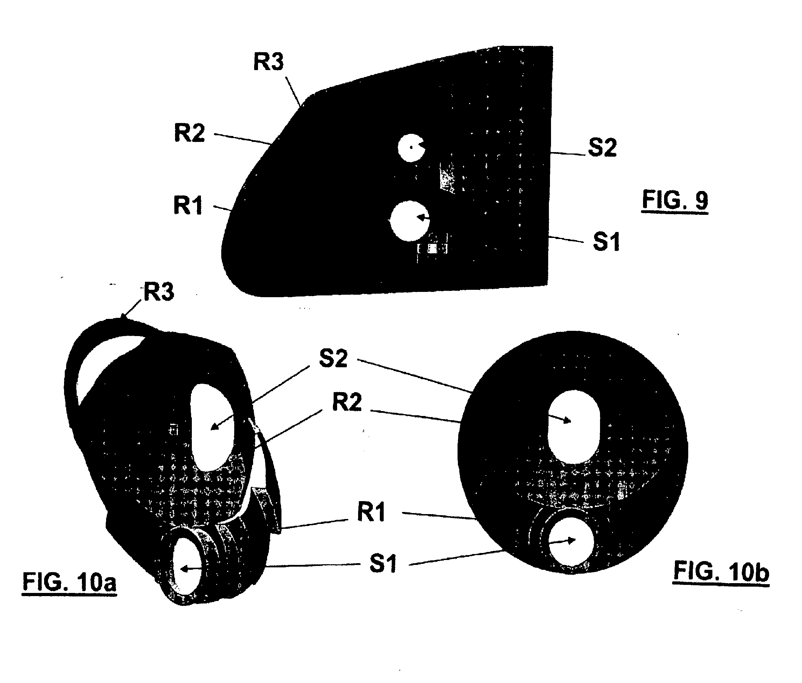

La figure 9 représente un autre exemple selon une configuration se rapprochant de l'exemple selon la figure 4, mais ici les deux sources S1 et S2 sont réparties dans deux réflecteurs distincts : on a un réflecteur R1 dans le quel est disposée une source S1. Cette source est une lampe bi filament, ayant un filament dédié à la fonction DRL et un filament dédié lampe ville. On a également un réflecteur R2 associé à une source S2 adaptés pour émettre un faisceau de type route. On a également une surface réfléchissante additionnelle R3 de type collerette : en mode de fonctionnement DRL, la source S1 émet des rayons en direction à la fois des réflecteurs R1,R2 et R3, ceci afin de pouvoir créer la plage éclairante de 40 cm² requise. La collerette R3 est optionnelle. Cet ensemble permet donc d'avoir trois fonctions : route, DRL et lampe ville tout en étant remarquablement compact. On peut noter, que dans cette réalisation, les réflecteurs R1 et R2 n'ont pas un pourtour circulaire : l'invention s'applique à toute forme de réflecteurs.

La figure 10a,10b représente un autre exemple, en vue de trois quarts (figure 10a) et en vue de face (figure 10b) : il s'agit ici d'un ensemble Anti Brouillard/DRL, composé du réflecteur R1 dans lequel est disposée la source S1 pour la fonction DRL, et d'un réflecteur R2 associé à une lampe S2 adaptés pour émettre un faisceau de type anti brouillard. On a aussi une collerette R3 qui a la même fonction que dans les exemples précédents. Cette collerette R3 peut être distincte du réflecteur R1 ou en faire partie intégrante. On note aussi la forme particulière de la partie du réflecteur R1 où se situe la lampe S1, qui présente une zone fresnelisée : des « marches d'escalier » ME sont créés dans le miroir. Ces marches ME permettent notamment au faisceau anti brouillard émis par S2 avec R2 de ne pas être perturbé par des rayons parasites qui proviendraient de la source S2 et qui seraient susceptibles, sans ces marches, de venir frapper le réflecteur R1 dédié DRL.

En conclusion, l'invention offre de nombreuses possibilités d'application pour des projecteurs bi-fonction, et est particulièrement avantageuse pour ceux impliquant une fonction DRL , en exploitant de deux façons différentes des réflecteurs ou portions de réflecteurs, de façon à ce qu'ils participent alternativement à l'une ou l'autre fonction. Le gain en termes de compacité est significatif, l'invention proposant ainsi une réponse souple et efficace à l'exigence de plage éclairante de grand surface requise notamment par la fonction DRL.

## Revendications

1. Dispositif d'éclairage pour véhicule automobile, comprenant une première source lumineuse (S1) focalisée sur une première zone réfléchissante (R1) et une seconde source lumineuse (S2) focalisée sur une seconde zone réfléchissante (R2), ladite première zone réfléchissante (R1) étant un réflecteur définissant une première cavité dans laquelle est disposée ladite première source lumineuse (S1), et la seconde zone réfléchissante (R2) étant un réflecteur définissant une seconde cavité dans laquelle est disposée ladite seconde source lumineuse (S2), les deux cavités (R1, R2) étant distinctes et disposées côte à côte, la première source lumineuse (S1) étant apte à émettre de la lumière à la fois en direction de la première zone réfléchissante (R1) et d'une partie de la seconde zone réfléchissante (R2), **caractérisé en ce que** la lumière provenant de la première source lumineuse (S1) et réfléchie par les deux zones réfléchissantes (R1, R2) correspond à un faisceau lumineux de feu diurne DRL, la lumière de la première source (S1) réfléchie par la première zone réfléchissante (R1) permettant d'obtenir la grille photométrique d'un DRL, et la lumière de la première source (S1) provenant de la seconde zone réfléchissante (R2) agrandissant la plage éclairante requise pour le DRL.

2. Dispositif selon la revendication précédente, **caractérisé en ce que** la réflexion par la seconde zone réfléchissante (R2) de la lumière émise par la première source lumineuse (S1) est directe ou est précédée par au moins une réflexion préalable sur une surface réfléchissante.

3. Dispositif selon l'une des revendications précédentes, **caractérisé en ce que** la seconde source lumineuse (S2) est apte à émettre de la lumière en direction de la seconde zone réfléchissante (R2), et optionnellement aussi en direction d'une partie de la première zone réfléchissante (R1), la lumière provenant de la seconde source lumineuse (S2) et réfléchie par la ou les zones réfléchissantes (R1, R2) correspondant à un faisceau à coupure, du type antibrouillard, code, faisceau de ville, faisceau d'autoroute, faisceau surélevé, ou à un faisceau sans coupure, du type route.

4. Dispositif selon l'une des revendications précédentes, **caractérisé en ce qu'**il comporte une troisième zone réfléchissante (R3) focalisée sur la première source lumineuse (S1).

5. Dispositif selon la revendication 4, **caractérisé en ce que** la troisième zone réfléchissante (R3) est au moins partiellement de forme annulaire et/ou est un prolongement de la première ou de la seconde surface réfléchissante (R1,R2).

6. Dispositif selon la revendication 4 ou la revendication 5, **caractérisé en ce qu'**une partie du pourtour de la troisième zone réfléchissante (R3) est en contact ou à proximité du pourtour de la première et/ou de la seconde zone réfléchissante (R1,R2,R12).

7. Dispositif selon l'une des revendications précédentes, **caractérisé en ce que** la première source lumineuse (S1) est apte à émettre de la lumière en direction d'une partie de la seconde zone réfléchissante (R2) par une réflexion préalable de la lumière directement émise sur une quatrième zone réfléchissante (R4) du type joue, notamment une joue associée à la première zone réfléchissante (R1).

8. Dispositif d'éclairage pour véhicule automobile selon l'une des revendications précédentes, **caractérisé en ce que** des moyens sont prévus pour éviter que la seconde source (S2) puisse être apte à émettre de façon significative de la lumière en direction du premier réflecteur (R1).

9. Dispositif d'éclairage automobile selon la revendication précédente, **caractérisé en ce que** les moyens comportent un mur (M) séparant des deux réflecteurs (R1,R2) et/ou une zone fresnelisée (ME) dans l'un des réflecteurs, notamment le premier réflecteur (R1).

10. Véhicule automobile **caractérisé en ce qu'**il est équipé d'au moins un dispositif selon l'une au moins des revendications précédentes.

## Claims

1. Lighting device for a motor vehicle, comprising a first source of light (S1) which is focussed on a first reflecting area (R1), and a second source of light (S2) which is focussed on a second reflecting area (R2), the said first reflecting area (R1) being a reflector which defines a first cavity in which the said first source of light (S1) is disposed, and the second reflecting area (R2) being a reflector which defines a second cavity in which the said second source of light (S2) is disposed, the two cavities (R1, R2) being distinct and disposed side by side, the first source of light (S1) being able to emit light both in the direction of the first reflecting area (R1) and of part of the second reflecting area (R2), **characterised in that** the light which is obtained from the first source of light (S1) and is reflected by the two reflecting areas (R1, R2) corresponds to a daytime running light beam DRL, the light from the first source (S1) which is reflected by the first reflecting area (R1) making it possible to obtain the photometric grid of a DRL, and with the light of the first source (S1) obtained from the second reflecting area (R2) enlarging the lighting range required for the DRL.

2. Device according to the preceding claim, **characterised in that** the reflection by the second reflecting area (R2) of the light emitted by the first source of light (S1) is direct, or is preceded by at least one prior reflection on a reflecting surface.

3. Device according to one of the preceding claims, **characterised in that** the second source of light (S2) can emit light in the direction of the second reflecting area (R2), and optionally also in the direction of part of the first reflecting area (R1), with the light which is obtained from the second source of light (S2) and is reflected by the reflecting area(s) (R1, R2) corresponding to a cut-off beam of the anti-fog, low-beam, town beam, motorway beam or raised-beam type, or to a beam without cut-off, of the high-beam type.

4. Device according to one of the preceding claims, **characterised in that** it comprises a third reflecting area (R3) which is focussed on the first source of light (S1).

5. Device according to claim 4, **characterised in that** the third reflecting area (R3) has at least partially an annular form, and/or is an extension of the first or the second reflecting surface (R1, R2).

6. Device according to claim 4 or claim 5, **characterised in that** part of the periphery of the third reflecting area (R3) is in contact with, or in the vicinity of the periphery of the first and/or the second reflecting area (R1, R2, R12).

7. Device according to one of the preceding claims, **characterised in that** the first source of light (S1) can emit light in the direction of part of the second reflecting area (R2) by prior reflection of the light emitted directly onto a fourth reflecting area (R4) of the cheek type, and in particular a cheek which is associated with the first reflecting area (R1).

8. Lighting device for a motor vehicle, according to one of the preceding claims, **characterised in that** means are provided to prevent the second source (S2) from being able to emit light significantly in the direction of the first reflector (R1).

9. Motor vehicle lighting device according to the preceding claim, **characterised in that** the means comprises a wall (M) which separates the two reflectors (R1, R2) and/or a fresnelised area (ME) in one of the reflectors, and in particular the first reflector (R1).

10. Motor vehicle, **characterised in that** it is equipped with at least one device according to at least one of the preceding claims.

## Patentansprüche

1. Kraftfahrzeugbeleuchtungsvorrichtung mit einer ersten auf einen ersten Reflexionsbereich (R1) fokussierten Lichtquelle (S1) und einer zweiten auf einen zweiten Reflexionsbereich (R2) fokussierten Lichtquelle (S2), wobei der erste Reflexionsbereich (R1) ein eine erste Höhlung bildender Reflektor ist, in der die erste Lichtquelle (S1) angeordnet ist, und der zweite Reflexionsbereich (R2) ein eine zweite Höhlung bildender Reflektor ist, in der die zweite Lichtquelle (S2) angeordnet ist, wobei die beiden Höhlungen (R1, R2) getrennt und nebeneinander angeordnet sind, wobei die erste Lichtquelle (S1) Licht sowohl in Richtung des ersten Reflexionsbereichs (R1) als auch in Richtung eines Teils des zweiten Reflexionsbereichs (R2) zu emittieren vermag,
**dadurch gekennzeichnet, dass** das von der ersten Lichtquelle (S1) stammende und durch die beiden Reflexionsbereiche (R1, R2) reflektierte Licht einem Lichtbündel eines Tagfahrlichts DRL entspricht, wobei das vom ersten Reflexionsbereich (R1) reflektierte Licht der ersten Lichtquelle (S1) das Lichtverteilungsraster eines Tagfahrlichts DRL zu erzielen erlaubt und das vom zweiten Reflexionsbereich (R2) stammende Licht der ersten Lichtquelle (S1) die für das Tagfahrlicht DRL erforderliche Leuchtfläche vergrößert.

2. Vorrichtung nach dem vorhergehenden Anspruch,
**dadurch gekennzeichnet, dass** die Reflexion durch den zweiten Reflexionsbereich (R2) des von der ersten Lichtquelle (S1) emittierten Lichts direkt ist oder dieser wenigstens eine vorherige Reflexion auf einer Reflexionsfläche vorangeht.

3. Vorrichtung nach einem der vorhergehenden Ansprüche,
**dadurch gekennzeichnet, dass** die zweite Lichtquelle (S2) Licht in Richtung des zweiten Reflexionsbereichs (R2) und optional auch in Richtung eines Teils des ersten Reflexionsbereichs (R1) zu emittieren vermag, wobei das von der zweiten Lichtquelle (S2) stammende und durch den oder die Reflexionsbereiche (R1, R2) reflektierte Licht einem Lichtbündel mit Hell-Dunkel-Grenze vom Typ Nebellicht, Abblendlicht, Stadtlicht, Autobahnlicht, Schilderbrückenlicht oder einem Lichtbündel ohne Hell-Dunkel-Grenze vom Typ Fernlicht entspricht.

4. Vorrichtung nach einem der vorhergehenden Ansprüche,
**dadurch gekennzeichnet, dass** sie einen dritten auf die erste Lichtquelle (S1) fokussierten Reflexionsbereich (R3) aufweist.

5. Vorrichtung nach Anspruch 4,
**dadurch gekennzeichnet, dass** der dritte Reflexionsbereich (R3) wenigstens teilweise ringförmig ist und/oder eine Verlängerung der ersten oder der zweiten Reflexionsfläche (R1, R2) ist.

6. Vorrichtung nach Anspruch 4 oder Anspruch 5,
**dadurch gekennzeichnet, dass** ein Teil des Umfangsrands des dritten Reflexionsbereichs (R3) den Umfangsrand des ersten und/oder des zweiten Reflexionsbereichs (R1, R2, R12) berührt oder in dessen Nähe liegt.

7. Vorrichtung nach einem der vorhergehenden Ansprüche,
**dadurch gekennzeichnet, dass** die erste Lichtquelle (S1) Licht in Richtung eines Teils des zweiten Reflexionsbereichs (R2) durch eine vorherige Reflexion des direkt auf einen vierten Reflexionsbereich (R4) vom Typ Seitenteil, insbesondere einem dem ersten Reflexionsbereich (R1) zugeordneten Seitenteil, emittierten Lichts zu emittieren vermag.

8. Beleuchtungsvorrichtung für Kraftfahrzeuge nach einem der vorhergehenden Ansprüche,
**dadurch gekennzeichnet, dass** Mittel vorgesehen sind, um zu verhindern, dass es der zweiten Lichtquelle (S2) möglich ist, Licht in bedeutendem Umfang in Richtung des ersten Reflektors (R1) emittieren zu können.

9. Kraftfahrzeug-Beleuchtungsvorrichtung nach dem vorhergehenden Anspruch,
**dadurch gekennzeichnet, dass** die Mittel eine die beiden Reflektoren (R1, R2) trennende Wand (M) und/oder einen Fresnel-Bereich (ME) in einem der Reflektoren, insbesondere dem ersten Reflektor (R1), aufweisen.

10. Kraftfahrzeug,
**dadurch gekennzeichnet, dass** es mit wenigstens einer Vorrichtung nach einem der vorhergehenden Ansprüche ausgestattet ist.
